# EUROPÄISCHE PATENTSCHRIFT

(11) **EP 0 535 468 B1**
(45) Veröffentlichungstag und Bekanntmachung des Hinweises auf die Patenterteilung: **02.08.1995**
(21) Anmeldenummer: 92115996.8
(22) Anmeldetag: 18.09.1992
(51) Int. Cl.: F16K 37/00, F16K 27/00

(54) **Ventilblock**
Valve assembly
Assemblage de soupapes

(30) Priorität: 30.09.1991 DE 4132541
(43) Veröffentlichungstag der Anmeldung: 07.04.1993
(73) Patentinhaber: Herion-Werke KG, D-70736 Fellbach (DE)
(72) Erfinder: Kroll, Dieter, W-7012 Fellbach (DE); Weber, Jürgen, W-7056 Weinstadt (DE)
(74) Vertreter: Leyh, Hans, Dr,-Ing.

(56) Entgegenhaltungen:
- DE-A- 2 745 155
- DE-B- 1 284 222
- DE-U- 7 035 629
- DE-U- 7 317 544
- DE-U- 7 801 921
- GB-A- 1 061 759

## Beschreibung

Die Erfindung betrifft einen Ventilblock, insbesondere für aggressive Fluide und/oder Fluide mit höherer Temperatur, mit einer Mehrzahl von Ventilpatronen und einer diese verbindenden aus einem Kunststoffmaterial bestehenden Verbindungsleiste, in welcher Verbindungskanäle zum Anschluß der einzelnen Ventilpatronen ausgebildet sind.

Aus der DE-U-7 317 544 ist ein Mehrwegesteuerventil bekannt, das einen aus Kunststoff bestehenden Ventilblock aufweist, der aus einer Mehrzahl von Ventilen aufgebaut ist. In dem Ventilblock ist ein Verbindungskanal zum Anschluß der einzelnen Ventile ausgebildet.
Die DE-B-1 284 222 zeigt einen Verschaltungsblock für eine pneumatische oder hydraulische Steuereinrichtung, der eine Mehrzahl von Ventilen aufweist und bei dem die Verbindungsleitungen mit Gießharzen umgossen sind.

Die DE-A-2 745 155 betrifft ein hydraulisches Blockventil aus mehreren Ventilpatronen, die untereinander durch in den Block eingeformte Kanäle verbunden sind. Die Ventilpatronen sind in Aufnahmebohrungen eingesetzt, welche in den Block eingearbeitet sind.

In der DE-U-7 801 921 ist eine Ventilbatterie beschrieben, die aus mehreren Ventilen besteht, und die eine in Form eines Rohres ausgebildete Batterieleiste aufweist, mit der die Ventile mechanisch und funktionell verbunden sind.

Die DE-U-7 035 629 betrifft einen Ventilmagneten, dessen Hubanker einen Stößel trägt, der durch eine Entlüftungsöffnung des Magneten herausragt und auf einen Mikroschalter einwirkt, welcher ein optisches oder akustisches Signal auslöst, durch das die Schaltposition des Ankers angezeigt wird.

Schließlich ist in der GB-A-1 061 759 eine Rohrleitung offenbart, in die im Abstand längs der Rohrleitung Elektroden eingesetzt sind, deren Stromkreis durch eine Flüssigkeit in der Rohrleitung schließbar ist. Auf diese Weise kann festgestellt werden, ob in der Rohrleitung eine Flüssigkeit vorhanden ist oder nicht.

Keine der vorgenannten Druckschriften befaßt sich mit dem Problem einer Leckage-Überwachung der einzelnen Ventile eines Ventilblocks.

Der Erfindung liegt daher die Aufgabe zugrunde, einen Ventilblock der eingangs genannten Art so weiterzubilden, daß die einzelnen Ventilpatronen des Blocks auf Leckage überwacht werden können.

Nach der Erfindung wird dies dadurch erreicht, daß jede Ventilpatrone mit einer metallischen Elektrode ausgerüstet ist, die mit einer Auswerteschaltung elektrisch verbunden ist, mit der auch eine zentrale metallische Elektrode in der Verbindungsleiste zur Bildung einer Detektoreneinrichtung elektrisch verbunden ist, und daß der Stromkreis der beiden Elektroden durch das Leckage-Fluid schließbar ist.

Zweckmäßige Weiterbildungen der Erfindung ergeben sich aus den Unteransprüchen.

Eine beispielsweise Ausführungsform der Erfindung wird nachfolgend anhand der Zeichnung erläutert, in der
- Figur 1: schematisch im Schnitt eine Ventilpatrone nach der Erfindung zeigt.
- Figur 2: zeigt schematisch im Schnitt eine Verbindungsleiste mit zwei angeflanschten Ventilpatronen nach Figur 1.

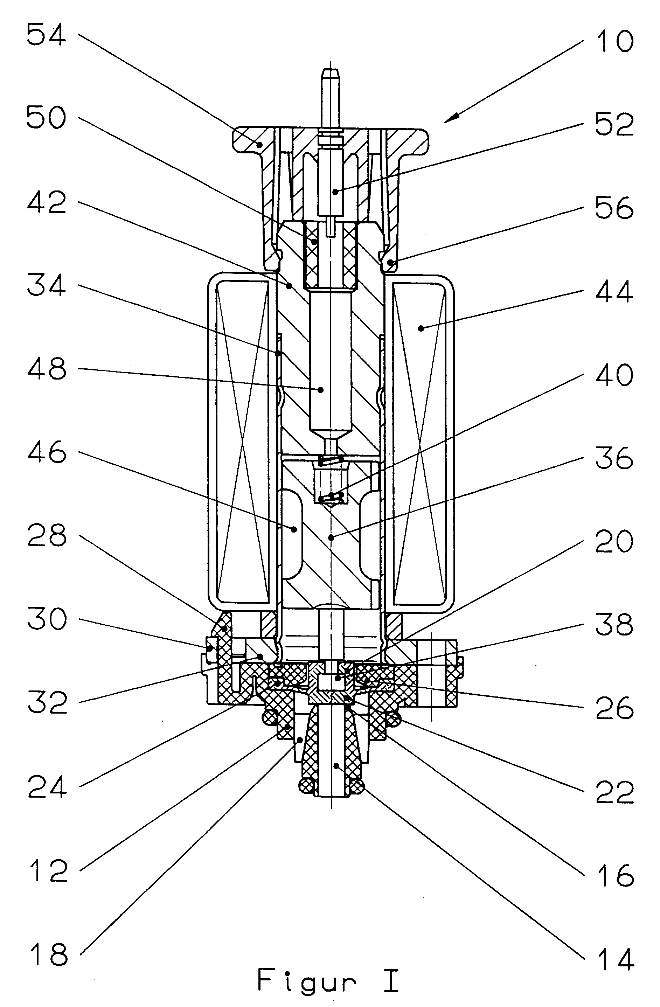

Figur 1 zeigt eine Ventilpatrone 10 mit einem Gehäuse 12 aus Kunststoff, das einen Eingang 14, einen Ventilsitz 16 und einen Ausgang 18 hat.

Eine ein Schließelement bildende Membran 20 schließt und öffnet mittels ihres Dichtstopfens 22 den Ventilsitz 16. Die Membran 20 hat an ihrem Umfang einen ringförmigen Dichtwulst 24, der zwischen einer Schulter des Gehäuses 12 und einem Haltering 26, ebenfalls aus Kunststoff, gehalten ist.
Das Gehäuse 12 ist mit drei Schnapphaken 28 versehen, die am Umfang des Gehäuses in gleichen Winkelabständen angeordnet sind und die, wie dargestellt, über die Oberfläche einer mit geeigneten Öffnungen versehenen Grundplatte 30 greifen, an deren Unterseite 32 das Gehäuse 12 anstößt, so daß das Gehäuse formschlüssig mit der Grundplatte 30 verbunden ist.
Mit der Grundplatte 30 ist mittels geeigneter Sicken oder Umbördelungen eine Magnetschlußhülse 34 fest verbunden, in der ein Magnetanker 36 axial verschiebbar angeordnet ist, dessen Kopf 38 in den Dichtstopfen 22 der Membran 20 eingebettet ist, wodurch der Magnetanker 36 formschlüssig mit der Membran 20 verbunden ist.
Eine Druckfeder 40 drückt den Magnetanker 36 und damit die Membran 20, 22 ständig gegen den Ventilsitz 16.
Die Druckfeder 40 stützt sich ihrerseits an einem stationären Gegenanker 42 ab, der mittels einer Einbördelung formschlüssig mit der Magnetschlußhülse 34 verbunden ist.
Anker,Gegenanker und Magnetschlußhülse sind umschlossen von einem Elektromagneten 44, der, was nicht dargestellt ist, an eine geeignete Spannungsquelle angeschlossen ist, wodurch der Magnetanker 36 in bekannter Weise geschaltet werden kann. Bei Erregung des Elektromagneten 44 wird der Magnetanker 36 gegen die Kraft der Feder 40 angehoben, bis er am Gegenanker 42 anschlägt, wodurch der Ventilsitz 16 geöffnet wird und das Fluid vom Eingang 14 zum Ausgang 18 strömen kann.
Der Gegenanker 42 ist mit einer zentralen Bohrung 48 versehen, in deren oberes vom Schließelement abgewandtes Ende ein Dichtelement in Form einer Büchse 50 aus Kunststoff eingesetzt ist. In die Bohrung der Büchse, die in die zentrale Bohrung 48 des Gegenankers 42 mündet, greift von oben her eine Elektrode 52 in Form eines Metallstiftes ein, der in einen Elektrodenhalter 54 aus Kunststoff eingespritzt ist. Der Elektrodenhalter 54 ist mittels eines Schnappverschlusses 56 am oberen Ende des Gegenankers 42 befestigt, wobei der Elektrodenhalter 54 außerdem den Elektromagneten 44 gegen eine axiale Verschiebung auf der Magnetschlußhülse 34 sichert.

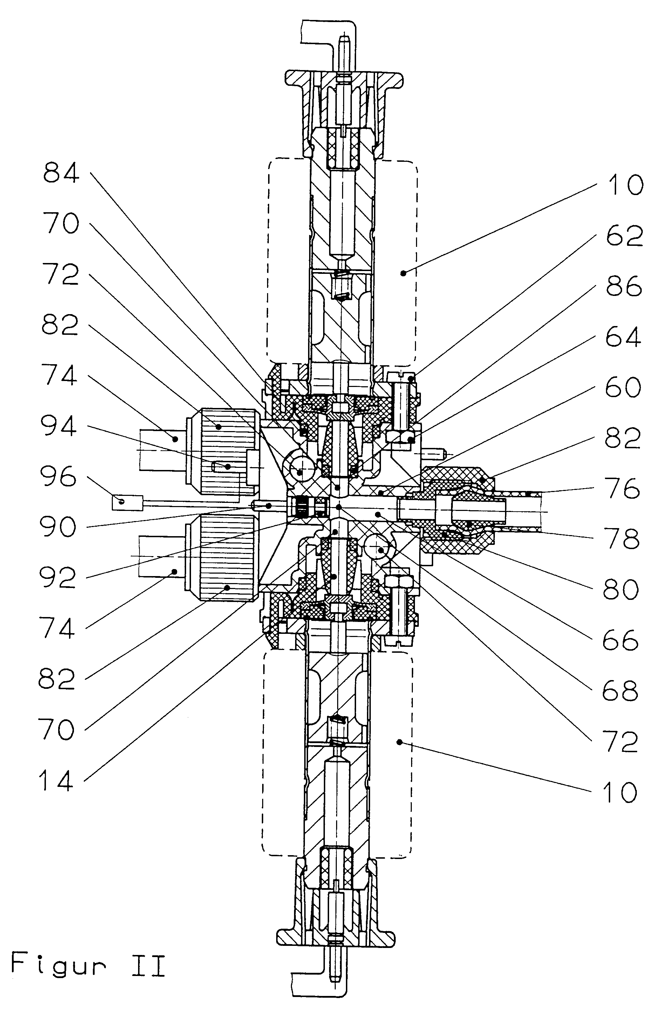

Figur 2 zeigt einen Schnitt durch eine Verbindungsleiste 60 aus Kunststoff, an die oben und unten je eine Ventilpatrone 10, wie es in Figur 1 dargestellt ist, angeflanscht ist. Die Längsrichtung der Verbindungsleiste 60 erstreckt sich quer zur Zeichenebene der Figur 2, und es können beispielsweise an der Oberseite und an der Unterseite der Ventilleiste 60 je fünf Ventilpatronen 10 hintereinander angeflanscht sein, so daß ein solcher Ventilblock dann aus einer Verbindungsleiste und zehn Ventilpatronen 10 aufgebaut ist.

Die Ventilpatronen 10 sind, wie dargestellt, mittels Schrauben 62 und Muttern 64, die in seitliche Gehäusetaschen des Gehäuses 60 eingeschoben sind, an der Verbindungsleiste befestigt.
Die Verbindungsleiste 60 ist mit einem Zufuhrkanal 66 für die Zufuhr eines Fluides versehen, der in einen quer zur Zeichenebene verlaufenden Längskanal 68 mündet. Vom letzteren zweigt für jede Ventilpatrone 10 je ein Querkanal 70 ab, der in den Eingang 14 (Figur 1) der zugehörigen Ventilpatrone 10 mündet. Der Ausgang 18 jeder Ventilpatrone 10 steht mit einem ihm zugeordneten Auslaßkanal 72 in Verbindung, der seinerseits an eine Auslaß-Schlauchleitung 74 angeschlossen ist.

Der Zufuhrkanal 66 ist an eine Zufuhr-Schlauchleitung 76 angeschlossen, wobei deren Schlauchende über eine konische Buchse 78 geschoben ist, die ihrerseits mit diesem Schlauchende in einen sich entsprechend konisch erweiternden Anschlußstutzen 80 eingesetzt ist und gegen den letzteren mittels einer Überwurfmutter 82, die auf, den Anschlußstutzen 80 aufgeschraubt ist, angedrückt wird.
Der Anschlußstutzen 80 ist mittels Ultraschall-Schweißung mit der Verbindungsleiste 60 verbunden.
Zwischen jeder Ventilpatrone 10 und der Verbindungsleiste 60 sind zur Abdichtung O-Ringe 84 und 86 eingebaut.

In die Verbindungsleiste 60 ist ferner eine zentrale metallische Elektrode 90 eingebaut, die an den Längskanal 68 angrenzt. Die Elektrode kann ebenfalls mittels Ultraschall-Schweißung in die Verbindungsleiste 60 eingebettet werden, wobei zwischen der Elektrode 90 und der Verbindungsleiste 60 noch ein O-Ring 92 eingesetzt ist zur Abdichtung wegen der unterschiedlichen Wärmeausdehnung von Stahl (Elektrode) und Kunststoff (Verbindungsleiste).
Ferner ist für jede Ventilpatrone 10 eine metallische Elektrode 94 vorgesehen, die ebenfalls in die Verbindungsleiste 60 eingebaut ist und mit dem jeder Ventilpatrone 10 zugeordneten Auslaßkanal 72 in Verbindung steht. Die Elektrode 94 kann in entsprechender Weise wie die Elektrode 90 an der Verbindungsleiste 60 befestigt sein.

Die Elektroden 52, 90, 94 ermöglichen es, die einzelnen Ventilpatronen 10 auf Leckage zu überwachen. Die zentrale Elektrode 90 sowie jede individuelle Elektrode 94 ist elektrisch mit einer Auswerteschaltung 96 verbunden. Bei geöffneten Ventilen ist der Stromkreis durch die elektrische Leitfähigkeit des Fluides geschlossen über den Zufuhrkanal 66, den Querkanal 70, den Eingang 14, den offenen Ventilsitz 16, den Ausgang 18 und den Auslaßkanal 72.
Bei geschlossenen Ventilen ist der Stromkreis unterbrochen. Dichtet nun aber eine Ventilpatrone nicht mehr ausreichend ab, so tritt eine Leckageströmung auf, durch welche der Stromkreis zwischen der zentralen Elektrode 90 und der individuellen Elektrode 94 bei dieser defekten Ventilpatrone 10 geschlossen ist. Damit steht ein auswertbares Signal an der Auswerteschaltung 96, z.B. zur Auslösung eines Alarmes, zur Verfügung, wodurch das defekte Ventil identifiziert und ausgewechselt werden kann.

Neben der Dichtheitsüberwachung jeder Ventilpatrone 10 kann auch deren Ankertotraum auf eventuelle Leckage infolge eines Membranrisses überwacht werden.
Bei einer Leckage infolge eines Risses der Membrane 20 wird der Ankertotraum innerhalb der Magnetschlußhülse 34, das heißt der Ringraum 46 und die Bohrung 48 im Gegenanker 42 mit dem Betriebs-Fluid angefüllt. Das Dichtelement 50 dichtet die Bohrung 48 zur Elektrode 52 ab. Sobald nun jedoch das Fluid die metallische Elektrode 52 berührt, wird ein Stromkreis geschlossen, beispielsweise der Stromkreis zwischen den Elektroden 52 und 90, die elektrisch mit der Auswerteschaltung 96 verbunden sind, wodurch wiederum ein auswertbares Signal zur Verfügung steht, das zur Auslösung eines Alarmes verwendet werden kann.
Voraussetzung für diese Art Leckageüberwachung ist es, daß die Verbindungsleiste und die übrigen mit dem Fluid in Berührung kommenden Teile aus einem nicht leitenden Kunststoff bestehen, andererseits aber das Betriebs-Fluid elektrisch leitend ist.

Jede Ventilpatrone 10 ist als vollständiges Ventil ausgebildet mit Ventilsitz und Schließelement, das als komplette Einheit vormontiert und als solche geprüft werden kann. Die Ventilpatrone kann leicht ein- und ausgebaut und individuell ausgetauscht werden. Dies führt zu kürzeren Wartungszeiten und zu niedrigeren Ersatzteilkosten.
Da ferner jede Ventilpatrone einzeln geprüft werden kann, wird die Prüfung des gesamten Ventilblocks für den Hersteller beträchtlich einfacher. Die Ventilpatrone ist vielseitig einsetzbar und insbesondere auch für andere Verbindungsleisten bei entsprechenden Einbaumaßen verwendbar.
Die Verbindungsleiste und die Anschlußstutzen sind im Spritzgußverfahren hergestellt und mittels Ultraschall miteinander verschweißt. Als Material wird ein hochtemperaturbeständiger Kunststoff verwendet. Gegenüber spanend hergestellten Verbindungsblöcken ergeben sich Vorteile wie z.B. ein kompakter, platzsparender Aufbau und eine strömungstechnisch günstige Gestaltung der inneren fluidischen Verbindungskanäle. Die ausgewählten Kunststoffe (PES oder PEEK) ermöglichen eine hohe thermische Belastung und erlauben eine thermische Sterilisierung des Geräts mit dem Ventilblock dank der Temperaturbeständigkeit. Es ergibt sich ferner eine deutliche Material- und Gewichtseinsparung, ebenso kann eine gleichbleibende Qualität bezüglich Geometrie und Oberflächengüte erreicht werden.
Ferner lassen sich dank der Spritzgießverarbeitung in überraschender Weise die Herstellungskosten senken.
Durch das elektrische Überwachungssystem erhält der Ventilblock ein hohes Maß an Sicherheit.

## Patentansprüche

1. Ventilblock, insbesondere für aggressive Fluide und/oder Fluide mit höherer Temperatur, mit einer Mehrzahl von Ventilpatronen (10) und einer diese verbindenden aus einem Kunststoffmaterial bestehenden Verbindungsleiste (60), in welcher Verbindungskanäle (66, 68, 70) zum Anschluß der einzelnen Ventilpatronen (10) ausgebildet sind, **dadurch gekennzeichnet,** daß jede Ventilpatrone (10) mit einer metallischen Elektrode (52) ausgerüstet ist, die mit einer Auswerteschaltung (96) elektrisch verbunden ist, mit der auch eine zentrale metallische Elektrode (90) in der Verbindungsleiste (60) zur Bildung einer Detektoreneinrichtung elektrisch verbunden ist, und daß der Stromkreis der beiden Elektroden (52, 90) durch das Leckage-Fluid schließbar ist.

2. Ventilblock nach Anspruch 1, wobei jede Ventilpatrone mit einem elektromagnetisch betätigbaren, mit ihrem Schließelement (20) verbundenen beweglichen Anker (36) sowie einem stationären Gegenanker (42) versehen ist, **dadurch gekennzeichnet,** daß die Elektrode (52) an dem vom Schließelement (20) abgewandten Ende des Gegenankers (42) angeordnet ist.

3. Ventilblock nach Anspruch 2, **dadurch gekennzeichnet,** daß die in Form eines Metallstiftes ausgebildete Elektrode (52) in einen Elektrodenhalter (54) aus Kunststoff eingespritzt ist, der am Gegenanker (42) mittels eines Schnappverschlusses (56) befestigt ist und zugleich zur axialen Fixierung des Magneten (44) dient.

4. Ventilblock nach Anspruch 1, **dadurch gekennzeichnet,** daß jeder Ventilpatrone (10) eine metallische Elektrode (94) zugeordnet ist, welche in Strömungsrichtung nach der jeweiligen Ventilpatrone (10) in die Verbindungsleiste (60) eingebaut und elektrisch mit der Auswerteschaltung (96) verbunden ist, und daß der Stromkreis zwischen jeder der Elektroden (94) und der zentralen Elektrode (90) durch das Fluid schließbar ist.

5. Ventilblock nach Anspruch 1, **dadurch gekennzeichnet,** daß die Verbindungsleiste (60) einschließlich ihrer eingeformten Verbindungskanäle (66, 68, 70) spritzgegossen ist.

6. Ventilblock nach einem der vorhergehenden Ansprüche, wobei die Verbindungsleiste (60) mit Anschlußstutzen (80) für Schlauchanschlüsse (76) versehen ist, **dadurch gekennzeichnet,** daß die spritzgegossenen Anschlußstutzen (80) mittels Ultraschall an die Verbindungsleiste (60) angeschweißt sind.

7. Ventilblock nach einem der vorhergehenden Ansprüche, **dadurch gekennzeichnet,** daß die Ventilpatronen (10) einzeln in die Verbindungsleiste (60) ein- und aus ihr ausbaubar sind.

## Claims

1. Valve block, in particular for aggressive fluids and/or fluids with higher temperature, with a number of valve cart ridges (10) and a connection strip (60) consisting of a plastic material connecting them, in which connection channels (66, 68, 70) are designed for connection of the individual valve cartridges (10), thereby characterized that each valve cartridge (10) is equipped with a metallic electrode (52), which is electrically connected with a plotting circuit (96), with which a central metallic electrode (90) in electrically connected in the connection strip (60) for formation of a detector facility , and that the circuit of the two electrodes (52, 90) can be closed through the leakage fluid.

2. Valve block according to Claim 1, whereby each valve cartridge is equipped with an electromagnetically actuated movable anchor (36) connected with its closing element (20), as well as a stationary counteranchor (42), thereby characterized that the electrode (52) is arranged on the end of the counteranchor faced away from the closing element (20).

3. Valve block according to Claim 2, thereby characterized that the electrode (52) designed in the shape of a metal pin is injected into an electrode holder (54) of plastic, which is fastened on the counteranchor (42) by means of a snaplock (56) and at the same time serves as axial fixation of the magnet (44).

4. Valve block according to Claim 1, thereby characterized that each valve cartridge (10) is allocated a metallic electrode (94), which is built into the connection strip (60) in the flow direction to the respective valve cartridge (10), and that the circuit between the electrode (94) and the central electrode (90) can be closed through the fluid.

5. Valve block according to Claim 1, thereby characterized that the connection strip (60) including its molded connection channels (66, 68, 70) is injection molded.

6. Valve block according to one of the previous claims, whereby the connection strip (60) is provided with connection sockets (80) for hose connections (76), thereby characterized that the injection molded connection sockets (80) are welded onto the connection strip (60) by means of ultrasonics.

7. Valve block according to one of the preceding claims, thereby characterized that the valve cartridges (10) can be installed and removed individually into the connection strip (60).

## Revendications

1. Bloc de soupapes, notamment pour fluides aggresifs et/ou fluides avec température élevée, avec une multitude de cartouches de soupapes (10) et une réglette de liaison plastique (60) reliant ces dernières dans laquelle se trouvent des voies de liaison (66, 68, 70) pour le raccordement des différentes cartouches de soupape (10), caractérisé par le fait que chaque cartouche de soupape (10) est équipée avec une électrode métallique (52) reliée électriquement avec un circuit d'évaluation (96) avec lequel est relié en outre une électrode centrale métallique (90) dans la réglette de liaison (60) et ce pour la formation d'un équipemewnt détecteur et que le circuit des deux élec trodes (52, 90) peut être fermé par le fluide de fuite.

2. Bloc de soupapes selon la revendication 1 où chaque cartouche de soupape est munie avec une armature mobile (36) reliée avec son élément de fermeture (20) et avec une armature opposée stationnaire (42), caractérisé par le fait que l'électrode (52) se trouve sur l'extrémité de l'armature opposée (42), extrémité opposée à l'élément de fermeture (20).

3. Bloc de soupapes selon la revendication 2, caractérisé par le fait que l'électrode (52) sous forme d'un goujon métallique est coulé dans un support d'électrodes (54) en matière plastique fixé sur l'armature opposée (42) à l'aide d'une fermeture à cliquet (56) et sert en même temps à la fixation de l'aimant (44).

4. Bloc de soupapes selon la revendication 1, caractérisé par le fait qu'à chaque cartouche de soupapes (10) est affectée une électrode métallique (94) qui en sens d'écoulement et après la cartouche de soupape correspondante (10) est montée dans la réglette de liaison (60) et reliée électriquement avec le circuit d'évaluation (96) et que le circuit entre chaque élec trode (94) et l'électrode centrale (90) peut être fer mé par le fluide.

5. Bloc de soupapes selon la revendication 1, caractérisé par le fait que la réglette de liaison (60) y compris leurs voies de liaison (66, 68, 70) sont coulées par fonte.

6. Bloc de soupapes sel on une des revendications précédentes où la réglette de liaison (60) est munie avec des manchons de raccordement (80) pour raccordements à tuyaux (76), caractérisé par le fait que les manchons de raccordement coulés à fonte (80) sont soudés par ultra-son à la réglette de liaison (60).

7. Bloc de soupapes selon une des revendications précédentes, caractérisé par le fait que les cartouches de soupape (10) peuvent être montées et démontées individuellement dans la réglette de liaison (60).
